# EUROPEAN PATENT SPECIFICATION

(11) **EP 4 549 350 B1**
(45) Date of publication and mention of the grant of the patent: **09.12.2026**
(21) Application number: 24209247.6
(22) Date of filing: 28.10.2024
(51) Int. Cl.: B65G 57/30, B65G 59/06, B65G 60/00, B66F 9/18

(54) **MOBILE DEVICE FOR STACKING AND RELEASING PALLETS**
MOBILE VORRICHTUNG ZUM STAPELN UND ENTSTAPELN VON PALETTEN
DISPOSITIF MOBILE POUR EMPILER ET LIBÉRER DES PALETTES

(30) Priority: 30.10.2023 IT 202300022770
(43) Date of publication of application: 07.05.2025
(73) Proprietor: Toppy S.r.l., 40053 Valsamoggia (BO) (IT)
(72) Inventor: PIANI, Daniele, 40050 MONTE SAN PIETRO (BO) (IT)
(74) Representative: Negrini, Elena

(56) References cited:
- WO-A1-2020/148734
- FR-A1- 2 993 872

## Description

The present invention is directed to logistics and management of pallets for goods, and relates to a mobile device for stacking and releasing pallets, i.e., assigned to stack and release pallets as well as to deposit one or more pallets at a time into different locations in a warehouse or the like.

There are known fixed devices intended to stack, deposit and supply pallets, whereby pallets are brought to and taken from the device by means of hand- or electric-driven forklifts or pallet trucks.

It is also known to use forklifts to build pallet stacks and to take pallets from said stacks.

Prior art document FR2993872 discloses a mobile device according to the preamble of claim 1.

A drawback of these known devices is that the use thereof shows poor flexibility as well as organizational and operational complexity.

Another drawback is that the carrying out of an operation always requires returning to the device, thus causing a lengthening of paths. Furthermore, every time that one pallet must be deposited into a different location, the whole stack needs to be transported and set down, the pallet on top is picked, with the whole stack then having to be lifted again to be brought to the subsequent location.

A further drawback is that said known devices require expert and skilled operators. An object of the present invention is to provide a mobile device for stacking and releasing pallets, that allows pallets located in several places to be picked, stacked and transported, said pallets afterwards being deposited into other different locations by means of simple optimized operations.

Another object is to provide a device that allows to optimize paths and that is very flexible in use.

A further object is to provide a device that is very simple, reliable and relatively cheap. Yet another object is to provide a device that does not require to be lifted at high heights and that can be used safely even by unexperienced operators.

The invention provides a mobile device as defined in claim 1.

The features of the invention are highlighted hereinbelow, with specific reference to the accompanying drawings, in which:
- FIGS. 1-3 are axonometric views, respectively front, back and bottom, of the mobile device for stacking and releasing pallets, object of the present invention, with one of its lifting members in a lowered condition, and with a part having been removed to better highlight other parts;
- FIGS. 4 and 5 illustrate a front projection view and an axonometric projection view, respectively, of the device shown in FIG. 1, with its lifting member in a lifted condition;
- FIGS. 6 and 7 illustrate a front projection view and an axonometric projection view, respectively, of the device shown in FIG. 1, with its lifting member in a lowered condition;
- FIGS. 8-11 are front orthogonal projection views of the device shown in FIG. 1 associated with a pallet stack consisting of only two pallets, for the sake of an easier representation, in a sequence providing the release of the bottom pallet in the stack;
- FIGS 12-15 are front axonometric views of the device shown in FIG. 1, in the same sequence providing the release of the bottom pallet in the stack, as shown in FIGS. 8-11.

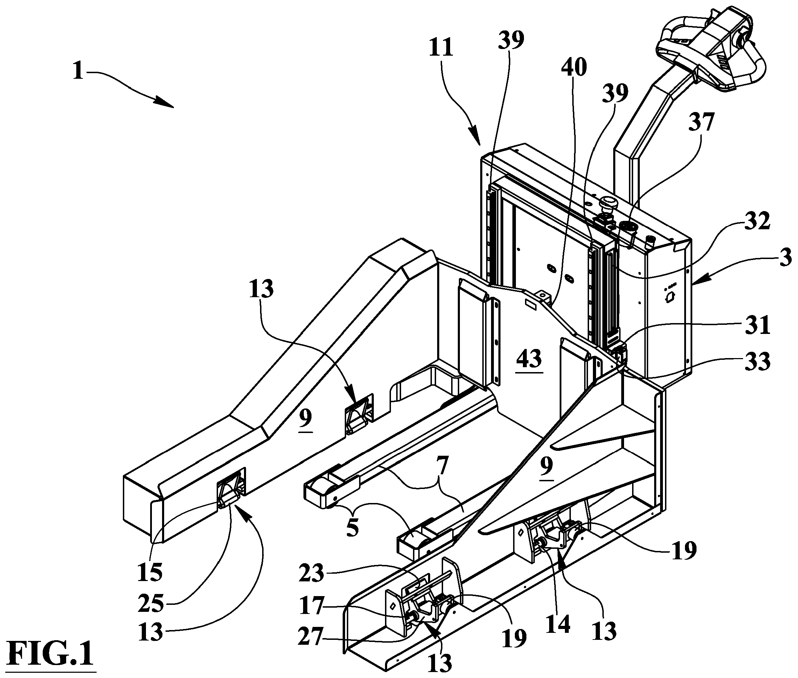

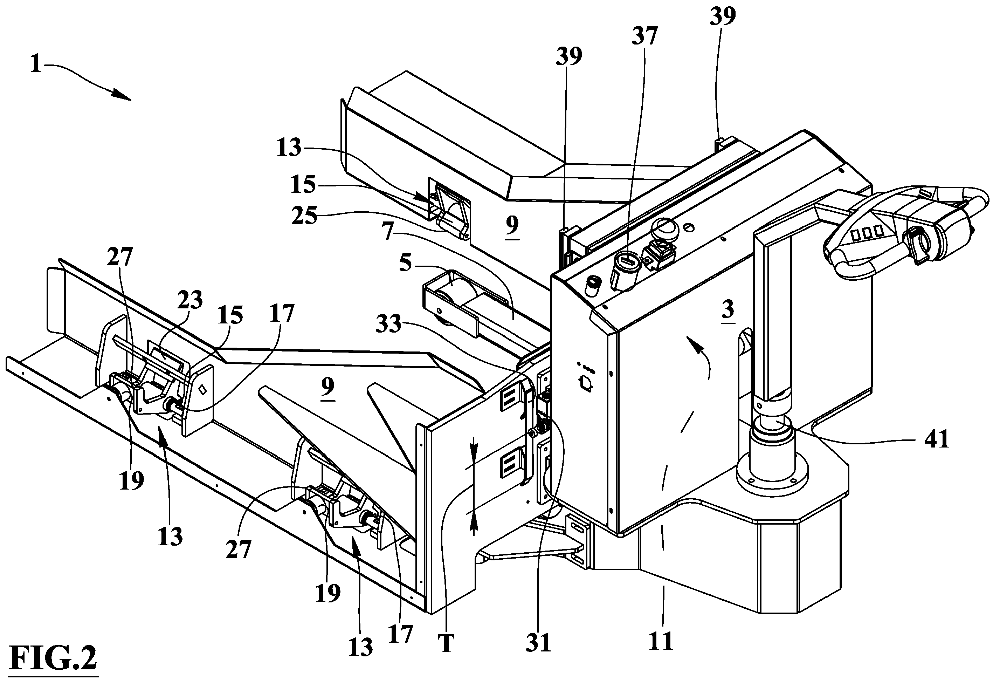

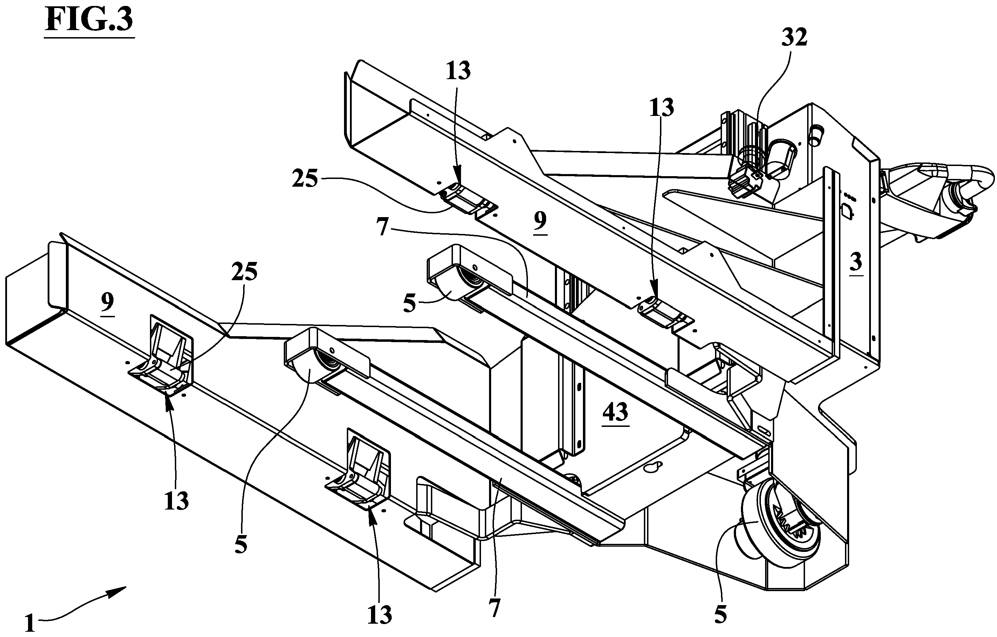

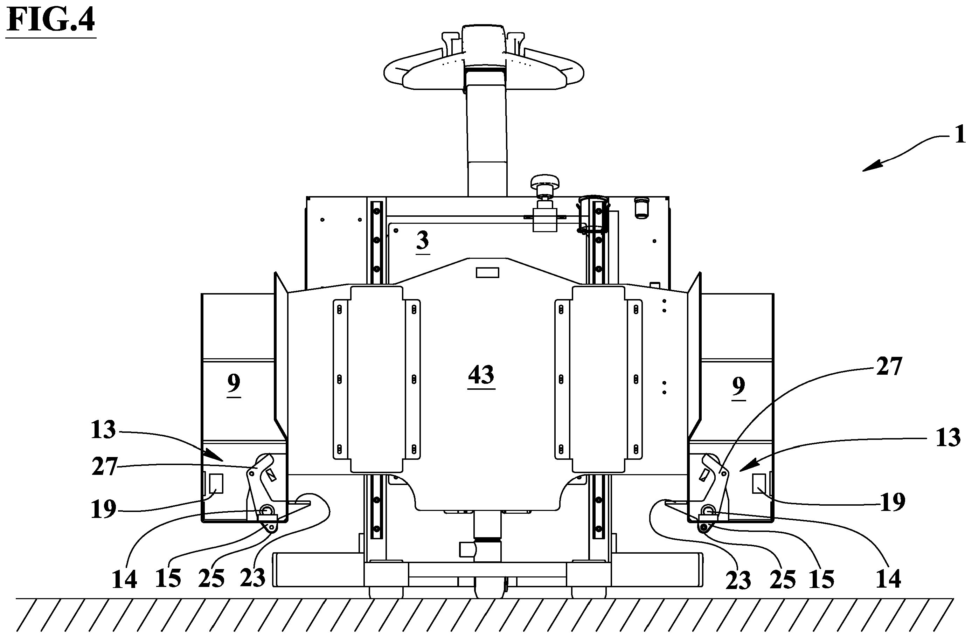

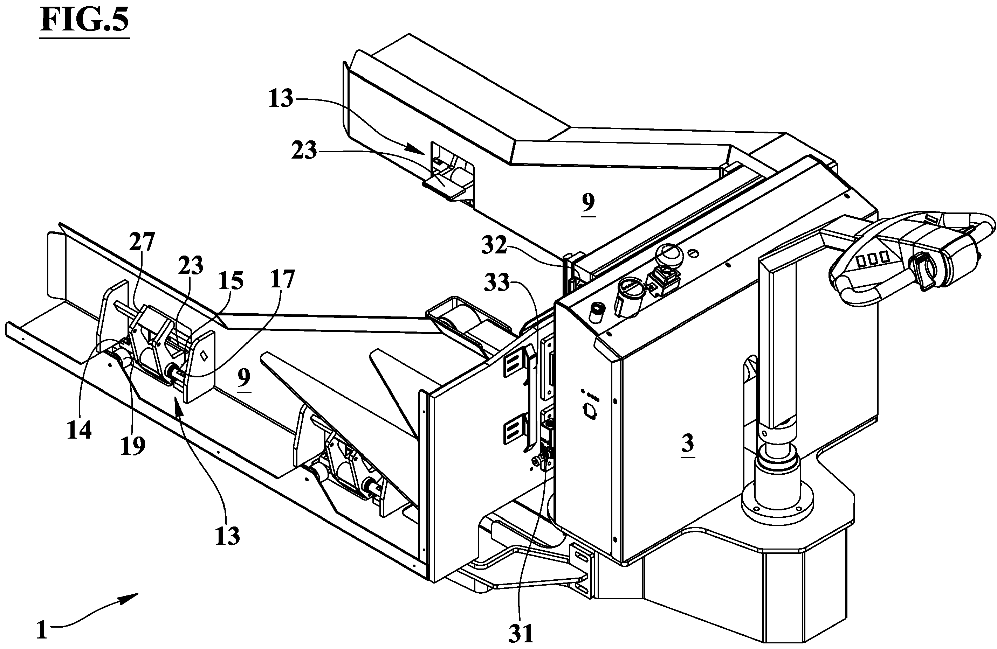

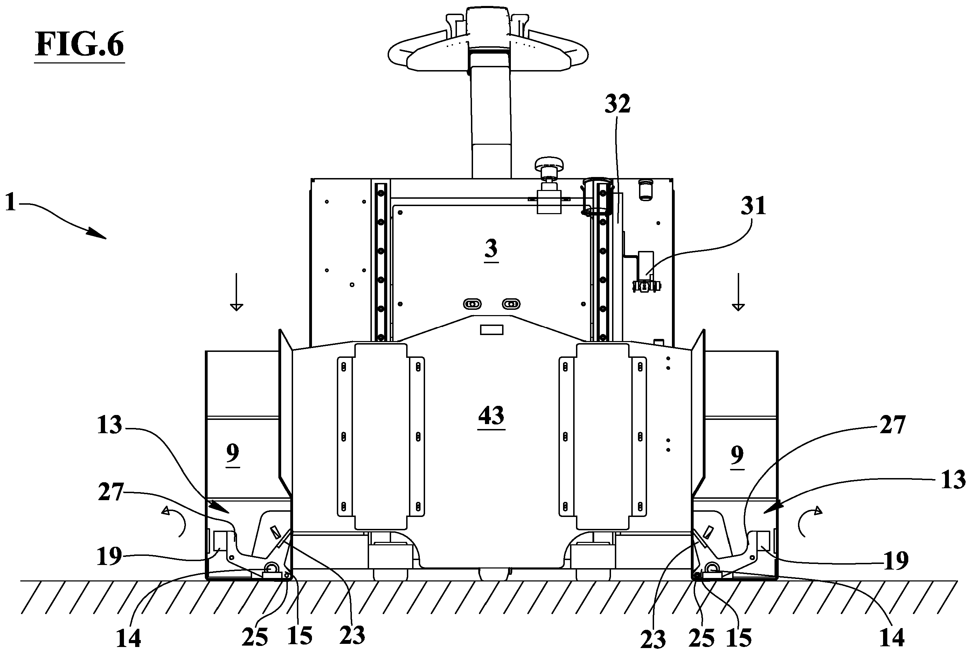

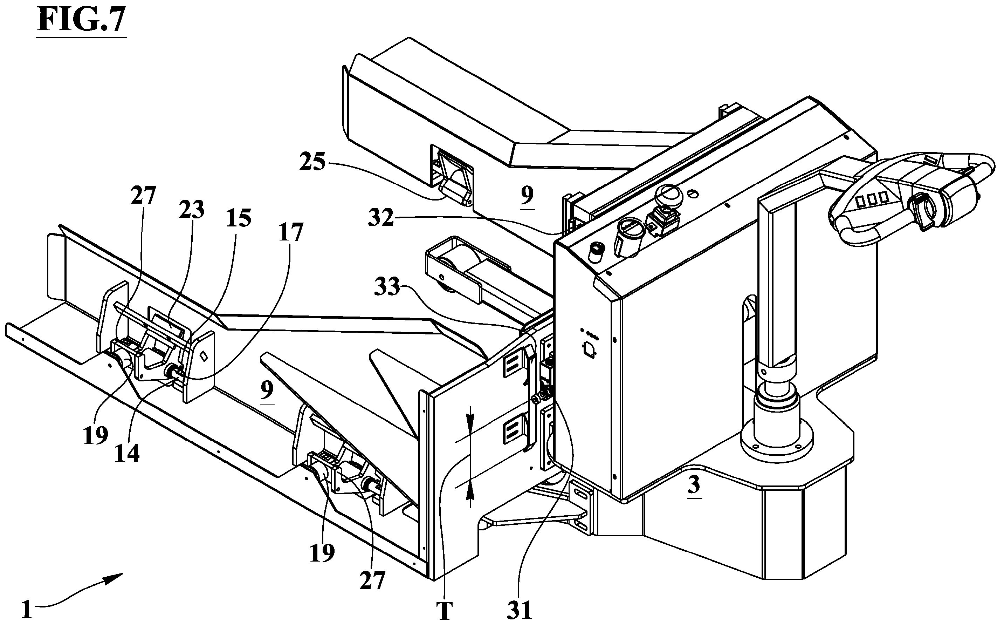

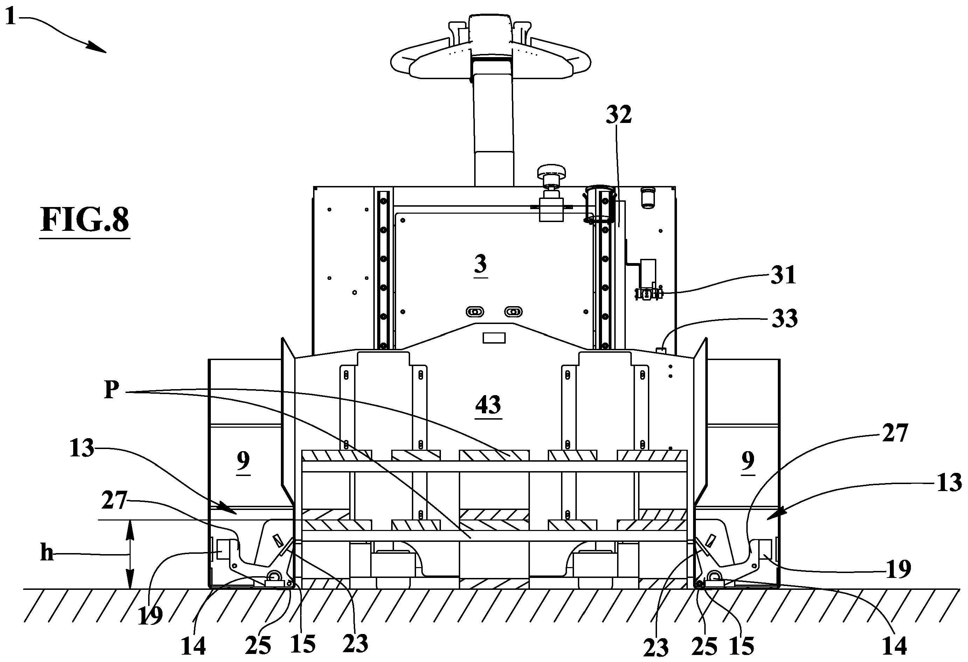

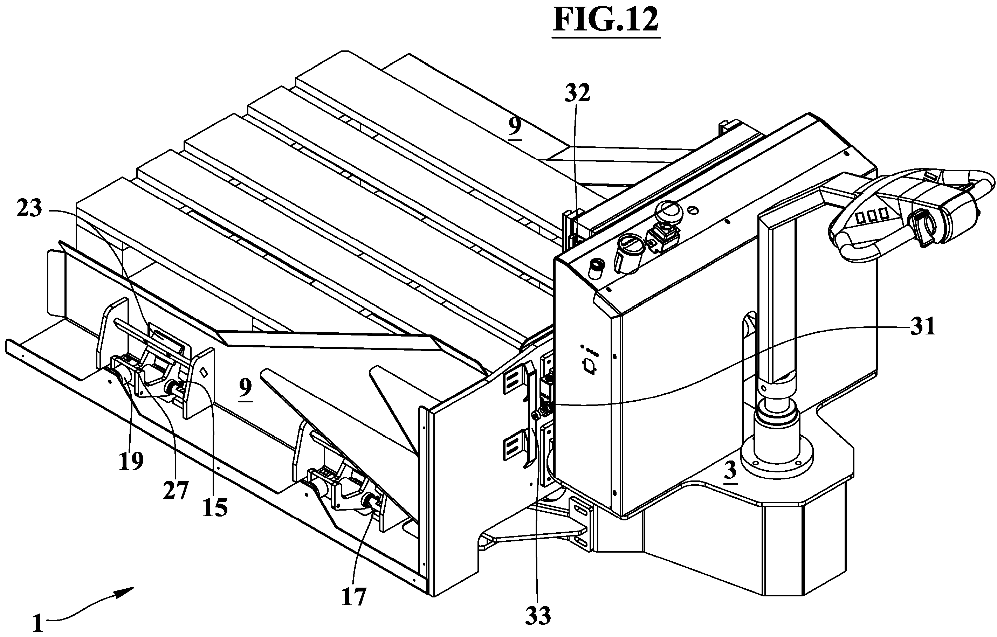

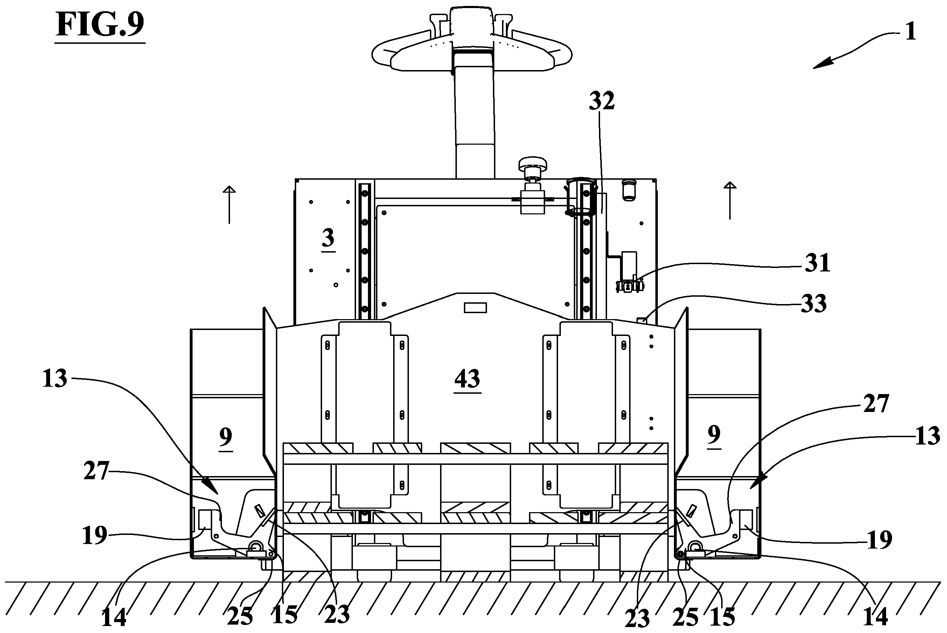

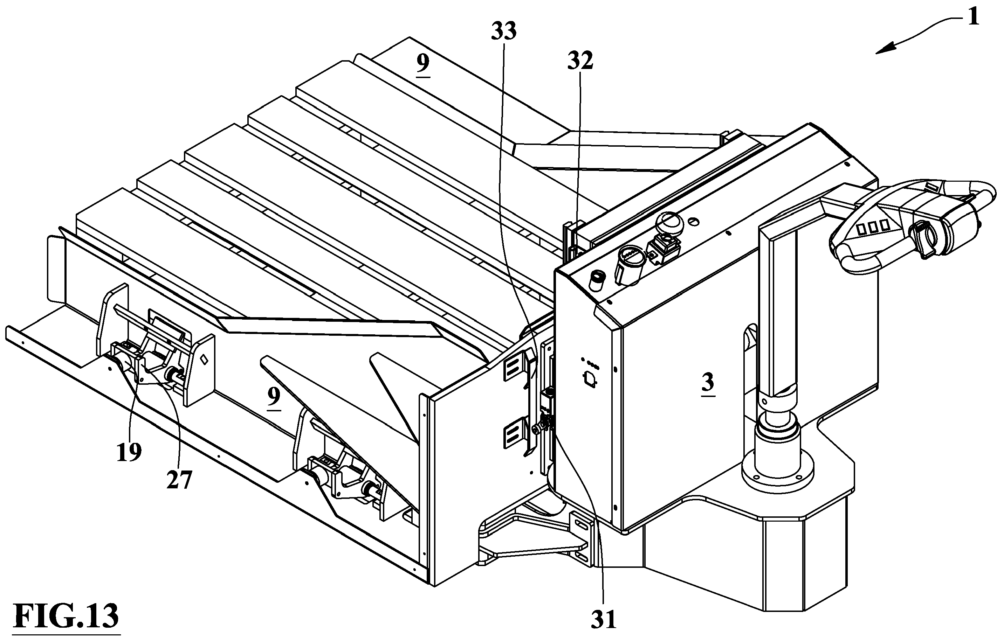

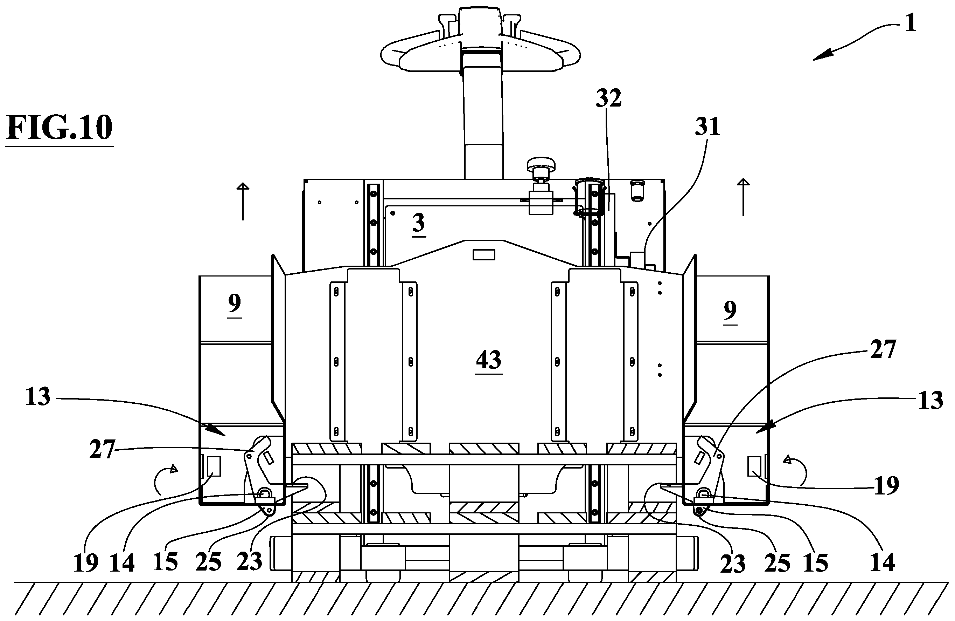

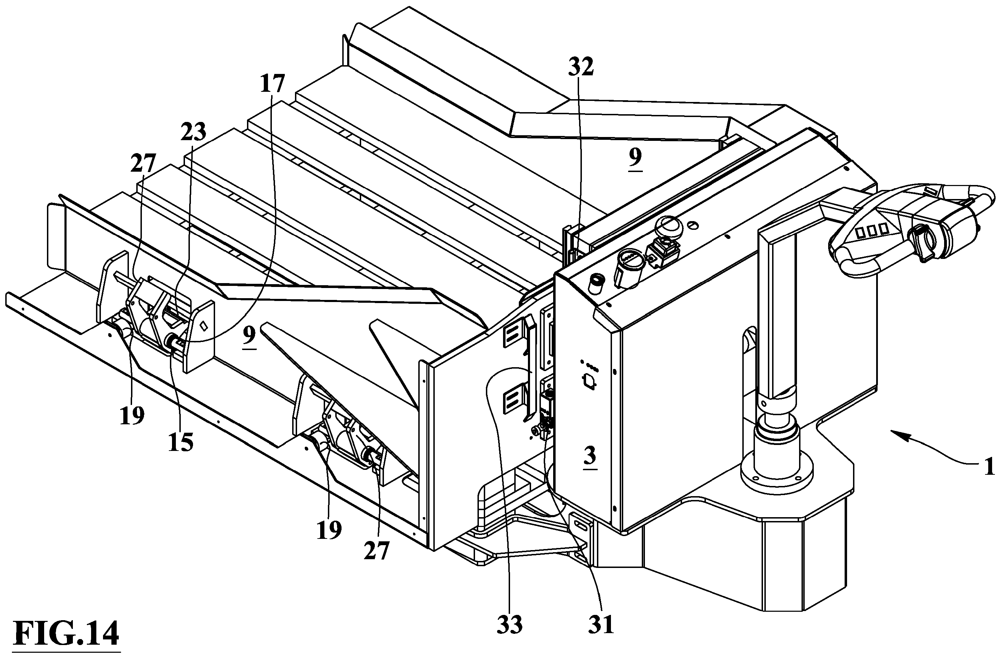

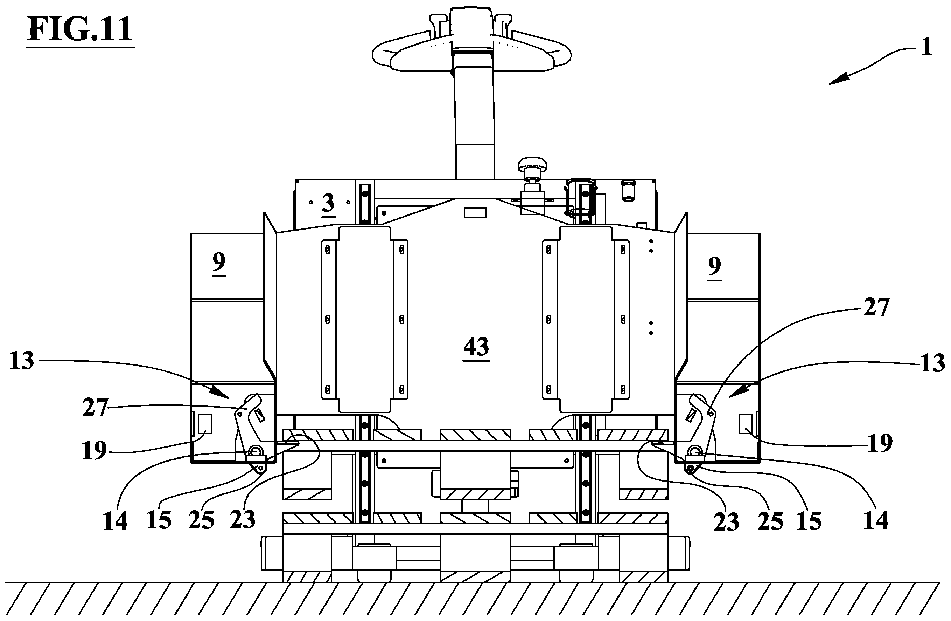

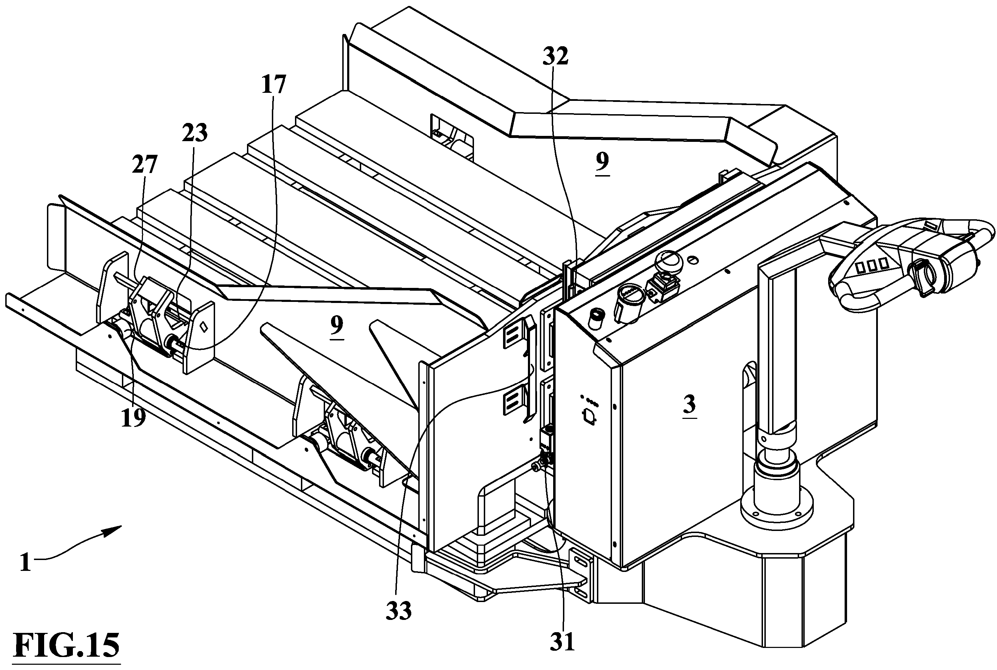

Referring to FIGS. 1-15, the mobile device for stacking and releasing pallets, object of the present invention, is indicated by 1.

In a basic device arrangement according to the invention, the device 1 comprises a moving member 3 provided with a plurality of wheels 5, e.g., three, of which two idle front wheels and one rear wheel that is either idle, in a thrust feed system, or motorized, in an independent, steered feed system, assigned to guide the device when it is moved on a floor. The front wheels can be connected either directly to the moving member 3 or to the free ends of a pair of forks 7 for pallets P, whose opposite ends are rigidly fixed to the moving member 3, as shown in the Figures.

The device also comprises a pair of lifting arms 9 that are mutually parallel and oriented horizontally, and connected to the moving member 3 by means of lifting members 11 assigned to vertically translate said lifting arms 9 by lifting and lowering them, said arms being placed at a mutual distance that is fixed or adjustable, and that is equal to, or slightly greater than, the width of a pallet, such that a pallet stack can be accommodated therebetween.

The lifting members 11 vertically translate the lifting arms 9 starting from a lower condition, in which the lifting arms 9 are totally lowered and come, or almost come, into abutment with the floor.

The lifting members 11 can translate the lifting arms 9 along a vertical path having a predetermined length T approximately equal to at least the height h of the pallet P, or, preferably, 2 to 4 or 5 times higher than said height h.

Each lifting arm 9 is provided with at least one support element 13 rotating around its own rotation axis, e.g., a pivot 14, between a retracted condition, in which said element is located within the profile of the respective lifting arm 9, and a protruding condition, in which it protrudes laterally from the profile of the respective lifting arm 9 (towards the lifting arm opposed to its respective one), whereby in such protruding condition it can abut the lower face of the top plane of the pallet, or another of its parts, and support it.

Each support element 13 is provided with, or connected to, a rotating element 15, whereby when the respective lifting arm 9 reaches its lower position, said element 15 causes the support element 13 to rotate in its retracted condition following the support element abutting the floor.

Each support element 13 is provided with a resilient element 17, e.g., in the form of a torsion spring wrapped around the pivot defining the rotation axis of the support element 13, and having its ends acting, respectively, on the support element 13 and on a part that is rigidly fixed to the corresponding lifting arm 9. Alternatively, the resilient element 17 can comprise a helical spring acting between an offset connector of the support element 13 and another connector rigidly fixed to the corresponding lifting arm 9. Each resilient element 17 transmits a resilient rotational force to the support element 13, such that in the absence of any greater opposing forces, element 13 rotates towards its protruding condition.

Each support element 13 is associated with lock means 19 of the reversible type, which can unlock and lock the support element 13 in its retracted condition on command.

In this basic arrangement, an operator can collect and stack pallets located on the floor, e.g., by deactivating all lock means 19, and thus allowing the resilient elements 17 to move the support elements 13 to the protruding condition, whereby they 13 get close to a pallet with the lifting arms 9 at the predetermined height T, or somewhat higher, and when said lifting arms 9 are on top of the pallet, the operator instructs them to get completely lowered, thereby allowing the support elements 13 to "hook the pallet" on the floor and then lift it, at least at the predetermined height T, Afterwards, the device goes towards a subsequent pallet to be stacked. Alternatively, and preferably, the collecting and stacking steps can be performed with the electromagnets turned off, by moving the device with the lowered lifting arms, placing them on the right and on the left of the pallet, whereby the subsequent lifting of said arms implies that the support elements 13 reach the protruding condition, "hook" the pallet and place it at the base of the stack.

In order to release the bottom pallet in the stack, the operator first controls the lifting arms 9 to reach a completely lowered condition, whereby the support elements 13 are caused to rotate within the profile of said lifting arms 9. Then, the operator activates the lock means 19 and locks the support elements 13 in their retracted condition. Subsequently, the operator lifts the lifting arms 9 to, or nearly to, the predetermined height T. Then, the operator deactivates the lock means 19, whereby the support elements 13 can disengage the bottom pallet and engage the second bottom pallet in the stack, such that the earlier can remain in its position on the floor while the device moves away.

As shown in the Figures, preferably the rotation axis of each support element 13 is horizontal and parallel to the lifting arms 9, and each of said support elements 13 comprises a shelf element 23 arranged approximately radial to the corresponding rotation axis, whereby following the rotation of the respective support element 13, the latter moves from a protruding condition in which it protrudes from the respective lifting arm 9, to a retracted condition in which it returns within the profile of said lifting arm 9, and does not protrude. Preferably, each shelf element 23 is in the form of a flat plate, almost horizontal in the protruding condition, and in said protruding condition it is assigned to support the pallet, whereas in its retracted condition there is no interference with the pallets. The rotating element 15 of each support element 13 comprises a protruding arm whose distal end 25 is spaced apart and lateral with respect to the rotation axis, such that the support element 13 is caused to rotate following such distal end abutting the floor, in the lower condition The corresponding shelf element 23 reaches its retracted condition when the lifting arm 9 is in said lower condition. Alternatively, the rotation axis of each support element 13 may be vertical, and each support element 13 may comprise a shelf element consisting of a radial arm assigned, in its protruding condition, to support the pallet; the respective rotating element may consist of a vertical pin that is vertically slidable and acts on the rotation axis by means of a helicoid, to cause the support element 13 to rotate following such pin abutting the floor, in the lower condition, thus causing the rotation of the radial arm within the profile of the respective lifting arm 9. Of course, the shelf elements 23 can have different or comparable arrangements or shapes.

Preferably, each lock means 19 consists of an electromagnet 19, and the respective support element 13 is provided with a lock arm 27 shaped to come into abutment with said electromagnet when the support element 13 is in the retracted condition, in particular when the lifting arm 9 is in the lower condition.

The lock arm 27 may be of the single type, the free end bearing a plate made of magnetizable material, e.g., soft iron, or, preferably, it may be of the double type, as shown in the Figures, for a more rigid fixing of the plate.

In such lower condition, with the electromagnets of the lock means 19 activated, the power supply of each electromagnet 19 generates a magnetic force that overwhelms said resilient force of the corresponding resilient element 17, and reversibly locks the corresponding support element 13 in the retracted condition. Alternatively, each lock means 19 is a mechanical lock that can be inserted and disinserted on command, and, for example, consists of a latch means, a bolt means, or the like, controlled by a Morse cable, tie rods, or the like.

In order to avoid manual control, by an operator, of the lock means to release the bottom pallet in the stack, in a preferred embodiment of the present invention, comprising all features shown in the Figures, it is provided that the electromagnets 19 are controlled by a microswitch 31 which is closed (to turn on the electromagnet) and opened (to turn off the electromagnet) by a linear cam 33, said microswitch and said cam preferably being fixed to the moving member 3 and to the lifting arms 9, respectively, or vice versa. Preferably, the microswitch 31 is fixed along a vertical guide 32 of the moving member, such that said moving member can be locked at an adjustable predetermined height T corresponding to the height h of the pallet type to be used, whereas the linear cam 33 is rigidly fixed to the lifting arms 9. Of course, alternatively, the adjustment of the predetermined height T is achievable by fixing the linear cam in a vertically adjustable manner.

Preferably, the microswitch 31 is of the type provided with an actuation arm, the free end thereof being equipped with a sliding block or roller, assigned to slide along the cam 33, and assigned to switch the state of the microswitch when it does not come into abutment with the cam. Preferably, the microswitch 31 is of the normally open type, to power the lock means 19 only when it comes into abutment with the linear cam 33, whereby, in said lower condition, the lower end of the cam 33 is placed at a vertical distance from the microswitch 31, approximately equal to the predetermined length T.

Preferably, at least the lower end of the linear cam 33 is bevelled or has an inclined plane, so as to avoid any sticking of the microswitch, and to make switching easier.

The electromagnets are powered by an electrical source, e.g., a rechargeable battery of the device 1, through the microswitch and an electrical selector switch 37 of the device 1, the latter connecting and disconnecting the microswitch 31 to and from the battery.

The electrical selector switch 37 is arranged on the moving member 3 or in another part of the device easily accessible and operable by the operator, to switch the power circuit of the electromagnet lock means 19 via the microswitch 31, between an open, i.e., non-powered, condition, for collecting pallets, and a closed, i.e., powered, condition, for releasing one pallet at a time. The release procedure resembles the one described above, except for the fact that the actuation of the electromagnets from the lowered condition to the condition in which the lifting arms reach the predetermined height T, is performed automatically following the microswitch 31 slidingly abutting the linear cam 33.

The lifting members 11 may be of various types, e.g., motorized pantograph members. Yet, according to the invention, the lifting members preferably comprise two vertical guides 39, two carriages for each guide, and an electric linear actuator 40, i.e., an electric jack, for the lifting process.

In particular, the vertical guides 39 are fixed to the moving member 3, and the respective carriages are fixed to the lifting arms 9 to mutually connect them in a vertically sliding manner, and the electric jack actuator is interconnected between the moving member 3 and the lifting arms 9. Furthermore, it may be operated by the operator by means of up/down pushbuttons, and is powered by the electric battery that also electrically feeds the microswitch 31 and the electromagnet lock means 19.

Preferably, the moving member 3 is provided with a handlebar connected to a steering axle 41, which, in turn, is connected to a motorized steered wheel 5, powered by said electric battery. Preferably, the handlebar bears up/down pushbuttons that may be operated by the operator to control the electric jack linear actuator by operating a vertical translation of the lifting arms 9.

The ends of the lifting arms 9 adjacent to the moving member 3, are mutually joined by a transverse wall 43 linked to the moving member 3 through the lifting members 11. The connection between the lifting arms 9 and the transverse wall 43 may be fixed and rigid, or may be of the horizontally sliding type, so as to adjust the mutual distance between the lifting arms 9, such that they can work with pallets having different widths.

The moving member 3 may be provided with a pair of side flaps 45, preferably fixed or interchangeable or adjustable, parallel to the lifting arms, and assigned to make it easier to correctly position the pallet on the floor.

Preferably, and in order to avoid any sticking and/or scratches on the floor, the distal end 25 of the arm of each rotating element 15 is provided with a sliding block made of a low-friction material such as polyethylene, PTFE or other wear-resistant, low-friction materials.

## Claims

1. A mobile device for stacking and releasing pallets provided with predetermined width, length and height (h), said device (1) comprising a moving member (3) provided with:
- a plurality of wheels (5) of which at least one is a motorized or idle wheel and at least one is a steered wheel for moving the device (1) on a floor;
- a pair of lifting arms (9) mutually parallel and oriented horizontally;
- lifting members (11) connected to the moving member (3) and assigned to vertically lift the lifting arms (9););
wherein:
- the lifting arms (9) are placed at a mutual distance equal to, or slightly greater than, the width of a pallet, such that a pallet stack can be accommodated therebetween;
- the lifting members (11) vertically translate the lifting arms (9) starting from a lower condition, in which the lifting arms (9) are totally lowered, such that they (9) travel a distance having at least a preset length (T) approximately equal to the height (h) of the pallet, and vice versa;
- each lifting arm (9) is provided with at least one support element (13) rotating around its own rotation axis between a retracted condition in which it is retracted in, and a protruding condition in which it protrudes from, the respective lifting arm (9), whereby in the protruding condition it (13) may abut the pallet and support it;
said device (1) being **characterized in that**:
- each support element (13) is provided with, or connected to, a rotating element (15) which, when the respective lifting arm (9) is in the lower condition, causes the support element (13) to rotate in the retracted condition following said support element abutting the floor;
- each support element (13) is provided with a resilient element (17) which transmits a resilient rotational force to the support element (13) towards its protruding condition;
- each support element (13) is associated with lock means (19) of the reversible type, which can unlock and lock the support element (13) in its retracted condition on command.

2. A device according to claim 1, **characterized in that** the rotation axis of each support element (13) is horizontal and parallel to the lifting arms (9), and each of such support elements (13) comprises a shelf element (23) assigned to support the pallet; and the respective rotating element (15) comprises a protruding arm whose distal end (25) is spaced apart and lateral with respect to the rotation axis, to cause the support element (13) to rotate following such distal end (25) abutting the floor in the lower condition.

3. A device according to claim 1 or 2, **characterized in that** each lock means (19) consists of an electromagnet; and **in that** the respective support element (13) is provided with a lock arm (27) shaped to abut such electromagnet, in the retracted condition, whereby when the electromagnet is powered, it generates a magnetic force that overwhelms said resilient force and reversibly locks the support element (13); or each lock means (19) is a mechanical lock that can be inserted and disinserted on command, and consists of a latch means or a bolt means, controlled by a Morse cable or tie rods.

4. A device according to any of the previous claims, **characterized in that** all lock means (19) are controlled manually via electrical power or mechanical drive, or, if they (19) consist of electromagnets, they are controlled by a microswitch (31) turned on and off by a linear cam (33), said microswitch (31) and linear cam (33) being fixed, rigidly and/or in a vertically adjustable manner, to the moving member (3) and to the lifting arms (9), respectively, or vice versa.

5. A device according to claim 4, **characterized in that** the microswitch (31) is of the normally open type, to power the lock means (19) only when it abuts the linear cam (33) whereby, in said lower condition, the lower end of the latter (33) is placed at a vertical distance from the microswitch (31), which is approximately equal to the preset length (T), or vice versa.

6. A device according to claim 5, **characterized by** comprising an electrical selector switch (37), operable by an operator, assigned to switch, by means of the microswitch (31), the power circuit of the electromagnet lock means (19) between an open condition, for collecting pallets, and a closed condition, or power condition, for releasing one pallet at a time.

7. A device according to any of the previous claims, **characterized in that** the moving member (3) is provided with forks (7) for pallets, whose free ends are provided with respective wheels (5).

8. A device according to any of the previous claims, **characterized in that** the moving member (3) is provided with vertical guides (39) and respective carriages of the lifting members (11), assigned to connect the moving member (3) to the lifting arms (9); and **in that** the lifting members (11) interconnected between the moving member (3) and the lifting arms (9) comprise an electric jack that can be operated by the operator by means of an up/down command, and possibly powered by an electric battery which also electrically feeds the microswitch (31) and the electromagnet lock means (19).

9. A device according to claim 8, **characterized in that** the moving member (3) is provided with a handlebar connected to a steering axle (41) which, in turn, is connected to a steered, motorized wheel (5) powered by said electric battery.

10. A device according to any one of the previous claims, **characterized in that** the ends of the lifting arms (9) adjacent to the moving member (3) are mutually joined by a transverse wall (43).

## Patentansprüche

1. Eine mobile Vorrichtung zum Stapeln und Freigaben von Paletten, die eine im Voraus festgelegte Breite, Länge und Höhe (h) aufweisen, wobei die Vorrichtung (1) ein Bewegungsteil (3) umfasst, das versehen ist mit:
- einer Vielzahl Räder (5), von denen zumindest eines ein motorisiertes Rad oder Zwischenrad ist, und mindestens eines ist ein Steuerrad zum Bewegen der Vorrichtung (1) auf einem Boden;
- einem Paar Hubarme (9) die parallel zueinander und horizontal ausgerichtet sind;
- Hubteile (11) die mit dem Bewegungsteil (3) verbunden sind und vorgesehen sind, um die Hubarme (9) vertikal anzuheben;
wobei
- die Hubarme (9) in einem Abstand zueinander angeordnet sind, der gleich oder geringfügig größer ist als die Breite einer Palette, sodass ein Palettenstapel dazwischen aufgenommen werden kann;
- die Hubteile (11) die Hubarme (9) vertikal bewegen, angefangen bei einem unteren Zustand, in dem die Hubarme (9) vollständig abgesenkt sind, sodass sie (9) einen Weg zurücklegen, der zumindest eine im Voraus festgelegte Länge (T) aufweist, die ungefähr der Höhe (h) der Palette entspricht, und umgekehrt;
- jeder Hubarm (9) mit mindestens einem Stützelement (13) versehen ist, das sich um seine eigene Rotationsachse zwischen einem eingefahrenen Zustand, in dem es eingefahren ist, und einem vorspringenden Zustand, in dem es von dem entsprechenden Hubarm (9) vorspringt, dreht, wobei es (13) in dem vorspringenden Zustand an der Palette anliegen und sie tragen kann;
wobei die Vorrichtung (1) **dadurch gekennzeichnet ist, dass**:
- jedes Trägerelement (13) mit einem Drehelement (15) versehen oder damit verbunden ist, das, wenn sich der entsprechende Hubarm (9) in dem unteren Zustand befindet, das Trägerelement (13) veranlasst, sich in den eingefahrenen Zustand zu drehen, woraufhin das Trägerelement auf dem Boden aufliegt;
- jedes Trägerelement (13) mit einem elastischen Element (17) versehen ist, das eine elastische Drehkraft auf das Trägerelement (13) hin zu seinem vorspringenden Zustand überträgt;
- jedem Trägerelement (13) Verriegelungsmittel (19) der reversiblen Art zugeordnet sind, die auf Befehl das Trägerelement (13) in seinem eingefahrenen Zustand entriegeln und verriegeln können.

2. Eine Vorrichtung gemäß Anspruch 1, **dadurch gekennzeichnet, dass** die Rotationsachse jedes Trägerelements (13) horizontal und parallel zu den Hubarmen (9) ist, und jedes dieser Trägerelemente (13) umfasst ein Regalelement (23), das vorgesehen ist, um die Palette zu tragen; und das entsprechende Drehelement (15) umfasst einen vorspringenden Arm, dessen distales Ende (25) beabstandet von und seitlich zu der Rotationsachse ist, um das Trägerelement (13) zum Drehen zu veranlassen, woraufhin dieses distale Ende (25) in dem abgesenkten Zustand auf dem Boden aufliegt.

3. Eine Vorrichtung gemäß Anspruch 1 oder 2, **dadurch gekennzeichnet, dass** jedes Verriegelungsmittel (19) aus einem Elektromagnet besteht; und dadurch, dass das entsprechende Trägerelement (13) mit einem Verriegelungsarm (27) versehen ist, der so geformt ist, dass er in dem eingefahrenen Zustand an diesem Elektromagnet anliegt, wobei wenn der Elektromagnet mit Strom versorgt wird, er eine magnetische Kraft erzeugt, die die elastische Kraft übersteigt und das Trägerelement (13) lösbar verriegelt; oder jedes Verriegelungsmittel (19) ist ein mechanisches Schloss, das auf Befehl eingesetzt und wieder entfernt werden kann, und aus einem Laschenmittel oder einem Bolzenmittel besteht, das von einem Morsezug oder Zugstangen gesteuert wird.

4. Eine Vorrichtung gemäß einem der vorhergehenden Ansprüche, **dadurch gekennzeichnet, dass** alle Verriegelungsmittel (19) manuell über elektrischen Strom oder einen mechanischen Antrieb gesteuert werden, oder, falls sie (19) aus Elektromagneten bestehen, über einen Mikroschalter (31) gesteuert werden, der von einer linearen Nocke (33) an- und ausgeschaltet wird, wobei der Mikroschalter (31) und die lineare Nocke (33) fest und/oder in einer vertikal verstellbaren Weise an dem Bewegungsteil (3) bzw. den Hubarmen (9) befestigt sind, oder umgekehrt.

5. Eine Vorrichtung gemäß Anspruch 4, **dadurch gekennzeichnet, dass** der Mikroschalter (31) üblicherweise vom offenen Typ ist, um das Verriegelungsmittel (19) nur dann mit Strom zu versorgen, wenn es an der linearen Nocke (33) anliegt, wobei in dem abgesenkten Zustand das untere Ende der Letzteren (33) in einem vertikalen Abstand zu dem Mikroschalter (31) angeordnet ist, der in etwa der im Voraus festgelegten Länge (T) entspricht, oder umgekehrt.

6. Eine Vorrichtung gemäß Anspruch 5, **dadurch gekennzeichnet, dass** sie einen elektrischen Auswahlschalter (37) aufweist, der von einem Bediener bedient werden kann, und vorgesehen ist, den Schaltkreis des elektromagnetischen Verriegelungsmittels (19) über den Mikroschalter (31) zwischen einem geöffneten Zustand zum Sammeln von Paletten und einem geschlossenen Zustand oder Stromzustand, zu schalten, um eine Palette nach der anderen freizugeben.

7. Eine Vorrichtung gemäß einem der vorhergehenden Ansprüche, **dadurch gekennzeichnet, dass** das Bewegungsteil (3) mit Gabeln (7) für Paletten versehen ist, deren freie Enden mit entsprechenden Rädern versehen sind.

8. Eine Vorrichtung gemäß einem der vorhergehenden Ansprüche, **dadurch gekennzeichnet, dass** das Bewegungsteil (3) mit vertikalen Führungen (39) und entsprechenden Beförderungen der Hubteile (11) versehen ist, die vorgesehen sind, um das Bewegungsteil (3) mit den Hubarmen (9) zu verbinden; und dadurch, dass die Hubteile (11), die zwischen dem Bewegungsteil (3) und den Hubarmen (9) miteinander verbunden sind, einen elektrischen Heber umfassen, der von einem Bediener über einen Auf-/Ab-Befehl bedienbar ist, und gegebenenfalls von einer elektrischen Batterie mit Strom versorgt wird, die auch den Mikroschalter (31) und das elektromagnetische Verriegelungsmittel (19) elektrisch versorgt.

9. Eine Vorrichtung gemäß Anspruch 8, **dadurch gekennzeichnet, dass** das Bewegungsteil (3) mit einer Lenkstange versehen ist, die mit einer Lenkachse (41) verbunden ist, die wiederum mit einem gesteuerten, motorisierten Rad (5) verbunden ist, das über die elektrische Batterie mit Strom versorgt wird.

10. Eine Vorrichtung gemäß einem der vorhergehenden Ansprüche, **dadurch gekennzeichnet, dass** die Enden der Hubarme (9) angrenzend an das Bewegungsteil (3) über eine querverlaufende Wand (43) miteinander verbunden sind.

## Revendications

1. - Dispositif mobile destiné à l'empilage et au déchargement de palettes comportant des largeur, longueur et hauteur (h) prédéterminées, ledit dispositif (1) comprenant un élément mobile (3) comportant :
- une pluralité de roues (5) dont au moins une est une roue motorisée ou folle et au moins une est une roue directrice pour déplacer le dispositif (1) sur un sol ;
- une paire de bras de levage (9) parallèles entre eux et orientés horizontalement ;
- des éléments de levage (11) reliés à l'élément mobile (3) et destinés à soulever verticalement les bras de levage (9) ;
dans lequel :
- les bras de levage (9) sont placés à une distance mutuelle égale à, ou légèrement supérieure à, la largeur d'une palette, de telle sorte qu'une pile de palettes peut être reçue entre eux ;
- les éléments de levage (11) déplacent verticalement en translation les bras de levage (9) à partir d'une position basse, dans laquelle les bras de levage (9) sont totalement abaissés, de telle sorte qu'ils (9) parcourent une distance ayant au moins une longueur prédéfinie (T) approximativement égale à la hauteur (h) de la palette, et réciproquement ;
- chaque bras de levage (9) comporte au moins un élément de support (13) tournant autour de son propre axe de rotation entre une position rétractée, dans laquelle il est rentré dans le, et une position en saillie, dans laquelle il fait saillie à partir du, bras de levage respectif (9), ce par quoi, dans la position en saillie, il (13) peut venir en butée contre la palette et la soutenir ;
ledit dispositif (1) étant **caractérisé par le fait que** :
- chaque élément de support (13) comporte ou est relié à un élément rotatif (15), lequel, lorsque le bras de levage respectif (9) est en position basse, provoque la rotation de l'élément de support (13) dans la position rétractée après que ledit élément de support est venu en butée contre le sol ;
- chaque élément de support (13) comporte un élément élastique (17) qui transmet une force de rotation élastique à l'élément de support (13) vers sa position en saillie ;
- chaque élément de support (13) est associé à des moyens de verrouillage (19) de type réversible, qui peuvent déverrouiller et verrouiller l'élément de support (13) dans sa position rétractée sur commande.

2. - Dispositif selon la revendication 1, **caractérisé par le fait que** l'axe de rotation de chaque élément de support (13) est horizontal et parallèle aux bras de levage (9), et chacun de tels éléments de support (13) comprend un élément tablette (23) destiné à supporter la palette ; et l'élément rotatif respectif (15) comprend un bras en saillie dont l'extrémité distale (25) est espacée et située latéralement par rapport à l'axe de rotation, afin de provoquer la rotation de l'élément de support (13) après que ladite extrémité distale (25) est venue en butée contre le sol en position basse.

3. - Dispositif selon la revendication 1 ou 2, **caractérisé par le fait que** chaque moyen de verrouillage (19) consiste en un électroaimant ; et **par le fait que** l'élément de support respectif (13) comporte un bras de verrouillage (27) façonné pour venir en butée contre un tel électroaimant, dans la position rétractée, ce par quoi, lorsque l'électroaimant est alimenté, il génère une force magnétique qui l'emporte sur ladite force élastique et verrouille de manière réversible l'élément de support (13) ; ou chaque moyen de verrouillage (19) est une serrure mécanique qui peut être introduite et retirée sur commande, et consiste en un moyen loquet ou un moyen verrou, commandé par un câble Morse ou des tirants.

4. - Dispositif selon l'une quelconque des revendications précédentes, **caractérisé par le fait que** tous les moyens de verrouillage (19) sont commandés manuellement par l'intermédiaire d'une alimentation électrique ou d'un entraînement mécanique, ou, s'ils (19) consistent en des électroaimants, ils sont commandés par un micro-interrupteur (31) activé et désactivé par une came linéaire (33), ledit micro-interrupteur (31) et ladite came linéaire (33) étant fixés, de manière rigide et/ou de manière réglable verticalement, respectivement à l'élément mobile (3) et aux bras de levage (9), ou réciproquement.

5. Dispositif selon la revendication 4, **caractérisé par le fait que** le micro-interrupteur (31) est du type normalement ouvert, afin d'alimenter les moyens de verrouillage (19) uniquement lorsqu'il vient en butée contre la came linéaire (33), ce par quoi, dans ladite position basse, l'extrémité inférieure de cette dernière (33) est placée à une distance verticale du micro-interrupteur (31), qui est approximativement égale à la longueur prédéfinie (T), ou réciproquement.

6. - Dispositif selon la revendication 5, **caractérisé par le fait qu'**il comprend un commutateur de sélection électrique (37), actionnable par un opérateur, destiné à commuter, au moyen du micro-interrupteur (31), le circuit d'alimentation des moyens de verrouillage à électroaimant (19) entre un état ouvert, pour la collecte de palettes, et un état fermé, ou état d'alimentation, pour libérer une palette à la fois.

7. - Dispositif selon l'une quelconque des revendications précédentes, **caractérisé par le fait que** l'élément mobile (3) comporte des fourches (7) pour palettes, dont les extrémités libres comportent des roues respectives (5).

8. - Dispositif selon l'une quelconque des revendications précédentes, **caractérisé par le fait que** l'élément mobile (3) comporte des guides verticaux (39) et des chariots respectifs des éléments de levage (11), destinés à relier l'élément mobile (3) aux bras de levage (9) ; et **par le fait que** les éléments de levage (11), interconnectés entre l'élément mobile (3) et les bras de levage (9), comprennent un vérin électrique pouvant être actionné par l'opérateur au moyen d'une commande de montée/descente, et éventuellement alimenté par une batterie électrique qui alimente également électriquement le micro-interrupteur (31) et les moyens de verrouillage à électroaimant (19).

9. - Dispositif selon la revendication 8, **caractérisé par le fait que** l'élément mobile (3) comporte un guidon relié à un essieu de direction (41) qui, à son tour, est relié à une roue motorisée, directrice (5) alimentée par ladite batterie électrique.

10. - Dispositif selon l'une quelconque des revendications précédentes, **caractérisé par le fait que** les extrémités des bras de levage (9) adjacentes à l'élément mobile (3) sont reliées entre elles par une paroi transversale (43).
